# EUROPÄISCHE PATENTSCHRIFT

(11) **EP 3 254 641 B1**
(45) Veröffentlichungstag und Bekanntmachung des Hinweises auf die Patenterteilung: **09.12.2020**
(21) Anmeldenummer: 16173538.6
(22) Anmeldetag: 08.06.2016
(51) Int. Cl.: A61C 3/00, A61C 19/00

(54) **VERFAHREN ZUR HERSTELLUNG EINES AUFSATZES ODER ANSATZES EINES STRAHLUNGSHÄRTGERÄTS, AUFSATZ ODER ANSATZ UND DENTALRESTAURATIONSERZEUGUNGSVORRICHTUNG**
METHOD FOR PRODUCING AN ATTACHMENT OF A RADIATION CURING DEVICE, ATTACHMENT AND DENTAL RESTORATION PRODUCING DEVICE
PROCÉDÉ DE PRODUCTION D'UN APPAREIL DE DURCISSEMENT PAR RAYONNEMENT, D'UNE FIXATION ET D'UN APPAREIL DE PRODUCTION DE RESTAURATION DENTAIRE

(43) Veröffentlichungstag der Anmeldung: 13.12.2017
(73) Patentinhaber: Ivoclar Vivadent AG, 9494 Schaan (LI)
(72) Erfinder: ROHNER, Gottfried, 9450 Altstätten (CH); KÖGEL, Alexander, 9463 Oberriet (CH); PAULER, Markus, 6800 Feldkirch (AT)
(74) Vertreter: Baronetzky, Klaus

(56) Entgegenhaltungen:
- DE-A1- 10 234 994
- US-A- 4 666 405
- US-A- 5 030 093
- US-A1- 2004 214 130

## Beschreibung

Die Erfindung betrifft ein Verfahren zur Herstellung eines Aufsatzes (24) oder Ansatzes eines Strahlungshärtgeräts gemäß dem Oberbegriff von Anspruch 1, ein Aufsatz oder Ansatz für ein Strahlungsgerät gemäß dem Oberbegriff von Anspruch 12 bzw. eine Dentalrestaurationserzeugnisvorrichtung gemäß dem Oberbegriff von Anspruch 13 zu schaffen, einer Dentalrestaurationserzeugungsvorrichtung, gemäß dem Oberbegriff von Anspruch 1, einen Aufsatz oder Ansatz gemäß dem Oberbegriff von Anspruch 12 sowie einer Dentalrestaurationserzeugungsvorrichtung gemäß dem Oberbegriff von Anspruch 13.

Bei der Lichthärtung von lichthärtbaren Dentalrestaurationsmaterialien ist es wichtig, dass nach Möglichkeit die gesamte vom Lichthärtgerät erzeugte und aus dem Lichtleitstab austretende Strahlung dem Dentalrestaurationsmaterial zugeleitet wird. Während der Lichthärtung wird das Ende des Lichtleitstabs in den Mund des Patienten geführt, um gezielt an der Stelle, an der das Dentalrestaurationsmaterial vorliegt, die Lichthärtung vornehmen zu können. Bei versehentlicher Berührung kann die Spitze, also auch die Lichtaustrittsoberfläche, des Lichtleitstabs verschmutzen, was zu einer Verschlechterung der Lichtabgabe und gegebenenfalls zu einem unvollständig durchgehärteten und damit im Grunde unbrauchbaren Dentalrestaurationsteils führen kann.

Aus der DE 42 33 870 A1 ist eine Schutzhülle für ein Lichthärtgerät bekannt geworden, die das Ende des Lichtleitstabs vor Verschmutzungen schützen soll.

Diese Schutzhülle ist als Einmalprodukt ausgebildet und soll nach Gebrauch verworfen werden.

Erfahrungsgemäß neigen Zahnärzte jedoch dazu, sparsam zu wirtschaften, und in der überwiegenden Anzahl der Fälle wird ein derartiges Einmalprodukt entgegen der Anwendungsanleitung nicht verworfen, sondern erneut verwendet, um eine Neubeschaffung zu vermeiden.

Im besten Fall säubert der Zahnarzt vor der Zweitverwendung der Schutzhülle diese, wobei jedoch nicht sichergestellt ist, dass dies erfolgt bzw. dass die Säuberung perfekt ist.

Das Ende des Lichtleitstabs ist typischerweise aus Glas und damit deutlich härter als das noch weiche Dentalrestaurationsmaterial. Wenn der Lichtleitstab versehentlich gegen das noch weiche Dentalrestaurationsmaterial gedrückt wird, verformt er dieses versehentlich, so dass die erwünschte Zahnoberfläche im Bereicht der Okklusionsfläche - oder gegebenenfalls auch im distalen Bereich dieser, aus welcher Richtung das Ende des Lichtleitstabs zum Dentalrestaurationsmaterial geführt wird - keineswegs mehr die gewünschte und exakt zu dem Antagonisten des zu behandelnden Zahns angepasste Gestaltung aufweist.

Um ein derartiges versehentliches Verformen zu verhindern, ist es ebenfalls seit längerer Zeit, beispielsweise aus der US 2004/0214130 A1, bekannt geworden, eine flexible Schutzabdeckung zu verwenden, beispielsweise aus Polyurethan oder Silikon, die auch beim Berühren des noch weichen Dentalrestaurationsmaterials dieses nicht in schädlicher Weise verformen soll.

Jedoch ist es schwierig, die Härte des Silikons bzw. Polyurethans so gering einzustellen, dass keine Verformung erfolgt, zumal das ungehärtete Dentalrestaurationsmaterial gegebenenfalls auch sehr weich sein kann. Zwar ist gemäß der genannten Veröffentlichung eine Durometerhärte ab 40 vorgesehen. Auch bei einer solchen besteht die Möglichkeit, dass die Härte des noch weichen Dentalrestaurationsmaterials geringer ist, so dass sich nicht das weiche Vorsatzteil, sondern das Dentalrestaurationsmaterial verformt, mit den genannten nachteiligen Folgen.

Insbesondere bei der Realisierung aus Polyurethan besteht zudem die Möglichkeit, dass durch den Kontakt zwischen dem weichen Dentalrestaurationsmaterial und der flexiblen Abdeckung das halbflüssige Dentalrestaurationsmaterial an der Abdeckung hängen bleibt und beim Lösen teilweise mit abgezogen wird, so dass weniger Dentalrestaurationsmaterial als beabsichtigt für die Lichthärtung zur Verfügung steht.

Auch dies führt zu einer unzureichenden Realisierung des erwünschten Dentalrestaurationsteils.

Demgegenüber ist es Aufgabe der Erfindung, ein Verfahren zur Herstellung eines Aufsatzes (24) oder Ansatzes einer Dentalrestaurationserzeugungsvorrichtung gemäß dem Oberbegriff von Anspruch 1 bzw. ein Aufsatz oder Ansatz gemäß dem Oberbegriff von Anspruch 12 sowie einer Dentalrestaurationserzeugungsvorrichtung gemäß dem Oberbegriff von Anspruch 13 zu schaffen, die es verhindert, dass das noch weiche Dentalrestaurationsmaterial in unerwünschter Weise durch Annäherung des Lichthärtgeräts beeinträchtigt wird.

Diese Aufgabe wird erfindungsgemäß durch Anspruch 1, 12 bzw. 13 gelöst. Vorteilhafte Weiterbildungen ergeben sich aus den Unteransprüchen.

Aus der Druckschrift US 5,030,093 sind ein Verfahren und eine Vorrichtung zur Platzierung eines lichtaktivierbaren Dentalrestaurationsmaterials in eine Kavitätpräparation oder zwischen benachbarten Zähnen und zur Polymerisation des Dentalrestaurationsmaterials dort bekannt. Die dortige Vorrichtung weist ein Strahlungshärtgerät auf, an das abtrennbar ein Arbeitselement angeschlossen ist, das gegen eine herzustellende Dentalrestauration gehalten wird, um während der Härtung deren Form aufrechtzuerhalten. Jedoch ist die Herstellung der dortigen Dentalrestauration recht zeitraubend.

Die Druckschrift DE 102 34 994 A1 offenbart eine Vorrichtung zur Anbringung einer Verblendung auf einen Zahn. Es ist dort ein Trägerelement aus Silikonkunststoff vorgesehen, das bei Bedarf zusammen mit einer Lichthärtungsvorrichtung zum Einsatz kommt. Demgegenüber ist es Aufgabe der Erfindung, ein Verfahren zur Herstellung eines Aufsatzes oder Ansatzes eines Strahlungshärtgeräts gemäß dem Oberbegriff von Anspruch 1, ein Aufsatz oder Ansatz für ein Strahlungsgerät gemäß dem Oberbegriff von Anspruch 12 bzw. eine Dentalrestaurationserzeugungsvorrichtung gemäß dem Oberbegriff von Anspruch 13 zu schaffen, eine Dentalrestaurationserzeugungsvorrichtung gemäß dem Oberbegriff von Anspruch 1 bzw. ein Aufsatz oder Ansatz gemäß dem Oberbegriff von Anspruch 17 zu schaffen, die es verhindert, dass das noch weiche Dentalrestaurationsmaterial in unerwünschter Weise durch Annäherung des Lichthärtgeräts beeinträchtigt wird.

Diese Aufgabe wird erfindungsgemäß durch Anspruch 1, 12 bzw. 13 gelöst. Vorteilhafte Weiterbildungen ergeben sich aus den Unteransprüchen.

Erfindungsgemäß wird die Tatsache ausgenutzt, dass typischerweise Dentalrestaurationsteile computergestützt, also per CAD/CAM realisiert werden. Die Designphase verläuft in-sofern nach dem Intraoralscan im virtuellen Bereich auf dem Computer, und nach Festlegung der Außenform des Dentalrestaurationsteils ist es im Grunde in das Belieben des Anwenders gestellt, in welcher Weise das Dentalrestaurationsteil hergestellt werden soll. Beispielsweise erlauben die CAD-Daten die Konvertierung in Fräsdaten im Format STL, oder aber auch die Realisierung eines Positivmodells. Dieses wird dann vergossen, und nach Aushärten der Muffel aus dieser ausgeschmolzen. So wird ein Formhohlraum für die Bereitstellung eines Dentalrestaurationsteils aus Keramik oder Komposit geschaffen.

Bei der Festlegung der Form des Dentalrestaurationsteils wird selbstverständlich auch die Form des Antagonisten berücksichtigt, aber es lassen sich auch gnathologische Gesichtspunkte einbinden, indem die sogenannte Funktionsabformung vorgenommen wird.

Erfindungsgemäß werden nun die ohnehin vorhandenen Daten in überraschend einfacher Weise für die Erzeugung eines Lichthärtgerät-Aufsatzes oder -Ansatzes aus transparentem Material benutzt. Dieser Aufsatz oder Ansatz bildet erfindungsgemäß eine Negativform für das Dentalrestaurationsmaterial.

Der Aufsatz oder Ansatz bildet damit gleichsam einen Stempel für die Formfestlegung des Dentalrestaurationsteils, der zum Einsatz gelangt, während das Dentalrestaurationsmaterial noch weich ist.

Während bislang nach Möglichkeit ein Kontakt zwischen Lichthärtgerät und Dentalrestaurationsmaterial vermieden wurde, wird nun gerade der Kontakt gesucht und ausgenutzt.

Im Unterschied zum Stand der Technik wird insofern der entgegengesetzte Weg gewählt, denn das Dentalrestaurationsmaterial ist vor Aushärtung stets weicher als der Aufsatz oder Ansatz. Überraschend entstehen damit gerade die im Stand der Technik bestehenden Probleme bei ähnlicher Weichheit nicht.

In vorteilhafter Ausgestaltung ist der Aufsatz oder Ansatz aus Silikon oder auch einem beliebigen anderen, an dem Dentalrestaurationsmaterial nicht haftenden und transparenten Material.

Erfindungsgemäß wird der Lichtleitstab während der gesamten Lichthärtzeit, die beispielsweise zwischen 5 und 30 Sekunden betragen kann, mit dem Dentalrestaurationsmaterial in Kontakt gehalten. In dieser Zeit härtet das Dentalrestaurationsmaterial von einer nahezu flüssigen Aggregatzustand in eine sehr festen Aggregatzustand durch.

Überraschend ergibt sich mit der Erfindung ein weiterer besonderer Vorteil hinsichtlich der Lichthärtzeit. Durch den unmittelbaren Kontakt zwischen der Oberfläche des Dentalrestaurationsmaterials und dem Aufsatz oder Ansatz entfällt die Notwendigkeit, die für die Härtung verwendete Strahlung, die aus dem Lichtleitstab stammt, durch eine Luftstrecke hindurch schicken zu müssen. Es erfolgt eine unmittelbare Einleitung der Strahlung vom Ende des Lichtleitstabs in den Aufsatz oder Ansatz, und aus diesem heraus in das Dentalrestaurationsmaterial. Der Brechungsindex des Aufsatzes oder Ansatzes kann nun bevorzugt so gewählt sein, dass er zwischen denjenigen des Glases des Lichtleitstabs und demjenigen des Dentalrestaurationsmaterials in weichem Zustand liegt. Der Anteil der an den Übergangsoberflächen reduzierten Strahlung lässt sich damit deutlich, beispielsweise um eine Zehnerpotenz, reduzieren, denn hierdurch wird verhindert, dass zweimal ein optischer Übergang zwischen Materialien mit hohen und niedrigen Brechungsindex, geschaffen werden muss, mit den typischen Verlusten aufgrund der Reflexion bzw. Brechung an der Übergangsfläche.

Dies bedeutet aber, dass mit deutlich geringeren Härtungszeiten ausgekommen werden kann, bei gleicher Eingangs-Lichtleistung.

Es versteht sich, dass diese Gesichtspunkte nicht nur für die Lichthärtung, sondern auch für die Wärmehärtung gelten, wobei meist ohnehin ein gewisser Anteil der übertragenen Strahlung im Infrarotbereich liegt und insofern als Wärmestrahlung anzusehen ist.

Der erfindungsgemäße Aufsatz oder Ansatz aus dem geeigneten Material wie beispielsweise Silikon lässt sich in einer vorteilhaften Ausgestaltung beispielsweise per 3D-Druck oder per Fräsen oder per Gießen herstellen. Der Silikonaufsatz bildet dann die Negativform für die erwünschte Zahnkontur. Diese lässt sich in an sich bekannter Weise aus der mittels eines Interdentalscanners erfassten Kontur ableiten und besteht als Negativform für die Oberfläche des Zahns nach Aufbringen des Dentalrestaurationsteils.

Bei dieser Ausführungsform ist der Aufsatz oder Ansatz ein Einmalteil, das jedoch patientenspezifisch ist, so dass die Wiederverwendung ausgeschlossen ist.

Erfindungsgemäß ergibt sich zudem, dass das Polieren durch die glatte Oberfläche des Aufsatzes oder Ansatzes entfallen kann, oder jedenfalls vereinfacht wird.

In einer weiteren Ausführungsform ist es vorgesehen, den Aufsatz oder Ansatz mit einer Negativgrundform für die Kompositmodellierung zu realisieren. Die Grundform ist menschlichen Zähnen nachempfunden, und es ist möglich, mit geringem Aufwand die je patientenspezifische Form dort zu modellieren, wobei die erwünschte Form des Dentalrestaurationsteils dann in einem Zuge ausgehärtet werden kann.

Eine weitere Variante der Erstellung der Oberfläche des Aufsatzes oder Ansatzes bezieht den Antagonisten ein. Bei dieser Lösung wird zunächst der noch nicht durchgehärtete Aufsatz oder Ansatz an den Antagonisten gehalten. Das Lichthärtgerät wird eingeschaltet und dann damit der Aufsatz oder Ansatz mindestens teilweise gehärtet. Die so erzeugte Negativoberfläche für das Dentalrestaurationsmaterial wird dann als Negativform für das Dentalrestaurationsmaterial - gegebenenfalls nach einer gewissen Bearbeitung - verwendet, so dass automatisch eine passende Okklusionsfläche bei dem zu behandelnden Zahn erzeugt wird.

Eine weitere Möglichkeit besteht darin, gleichsam eine Negativformbibliothek für naturidentische Negativformen von allen natürlichen Zähnen bereitzuhalten. Entsprechende Negativformen bestehen dann für jeden Zahn in der entsprechenden Grundform, aber auch in verschiedenen Größen. Hierdurch lässt sich ein Negativform-Zahnformschlüssel für das gesamte menschliche Gebiss bereitstellen.

Es ist auch möglich, dass Dentalrestaurationsmaterial in den Formhohlraum, der zwischen dem Restzahn und dem Aufsatz oder Ansatz gebildet ist, einzubringen. Hierzu weist der Aufsatz oder Ansatz einen Einlasskanal für Dentalrestaurationsmaterial auf, das dann beispielsweise mit einer Spritze eingebracht wird. Bei dieser Lösung ist es günstig, wenn darauf geachtet wird, dass die im Formhohlraum befindliche Luft dann entweichen kann. Dies geschieht bevorzugt über einen porösen Luftauslass, der das Austreten von Luft ermöglicht, aber das Hindurchtreten von Dentalrestaurationsmaterial verhindert. Bei dieser Lösung ist sichergestellt, dass kein Überschuss an Dentalrestaurationsmaterial besteht, so dass das aufwendige Entfernen von Randwülsten, wie es bei Kompositmaterial üblich ist, entfallen kann.

Es versteht sich, dass sowohl der Einlasskanal als auch der Luftauslass nicht im Strahlungsbereich liegen sollten. Beide können beispielsweise seitlich angeordnet sein, bevorzugt einander gegenüberliegend. Der Einlasskanal kann auch durch einfaches Durchstechen des Aufsatzes oder Ansatzes seitlich mit einer Spritze mit dem Dentalrestaurationsmaterial geschaffen werden. Der Formhohlraum wird dann mittels der Spritze befüllt, bis ein Gegendruck entsteht, der anzeigt, dass der Formhohlraum vollständig mit Dentalrestaurationsmaterial gefüllt ist.

Bevorzugt ist der Luftauslass in einem oberen Bereich des Formhohlraums angeordnet, um so jedenfalls sicherzustellen, dass keine Luftbläschen verbleiben, die dann nachgefüllt werden müssten.

Durch geschickte Anordnung des Luftauslasses kann die verbleibende Luft im Formhohlraum jedenfalls vollständig entweichen.

Der Aufsatz oder Ansatz ist jedenfalls sicher und unverlierbar auf dem vorderen Ende des Lichtleitstabs des Lichthärtgeräts befestigt. Um die Unterbrechung des Lichtstrahls durch eine dazwischenliegende Luftschicht zu vermeiden, ist es möglich, die Oberfläche des Lichtleitstabs vor Aufbringen des Aufsatzes oder Ansatzes mit einer geeigneten Flüssigkeit zu benetzen, so dass ein luftfreier Strahlungsübergang zwischen dem Austrittsende des Lichtleitstabs und dem Aufsatz oder Ansatz gewährleistet ist.

Der Aufsatz oder Ansatz kann im Grunde eine beliebige Form aufweisen. Bevorzugt umgibt er das vordere Ende des Lichtleitstabs vollständig und erstreckt sich dann - sich gegebenenfalls etwas verjüngernd oder erweiternd - zu der Negativformoberfläche des Aufsatzes oder Ansatzes hin, wobei diese Fläche jedenfalls den Bereich aufzubringenden Dentalmaterials vollständig abdeckt.

Bevorzugt ist der Überlappungsrand zu dem gesunden Zahn so gewählt, dass eine Minimalbreite nicht unterschritten wird, die mindestens 1 mm, bevorzugt aber 2 mm oder 3 mm betragen sollte. Hierdurch lässt sich ein Druck zwischen Lichthärtgerät und Zahn ausüben, ohne dass der Aufsatz oder Ansatz verformt würde. Dieser Druck dient zugleich der Abstützung, so dass sichergestellt ist, dass der Zahnarzt bei der Behandlung keine Schwierigkeiten hat, das Lichthärtgerät ruhig zu halten, zumindest in der nunmehr noch geringeren Aushärtzeit.

Es ist auch günstig, wenn der Aufsatz oder Ansatz aus hochtransparentem Material gestaltet ist. Hierdurch wird die aufgebrachte Strahlungsenergie nicht oder nicht merklich reduziert. Zudem kann der Aufsatz oder Ansatz im Grunde als ein massiver Körper ausgebildet sein, der in seinem Mittelbereich ausgesprochen stabil ist und lediglich dessen Enden hülsenförmig aufgeweitet sind, zum einen zur Umfassung des Endes des Lichtleitstabs, und zum anderen zum Abstützen an den gesunden Bereichen des zu behandelnden Zahnes.

Gemäß einer vorteilhaften Ausgestaltung ist ein zusätzlich beigefügter und wiederverwendbarer Adapterring vorgesehen. Der Adapterring ist dann sinnvoll, wenn der Typ des zu verwendenden Lichthärtgeräts nicht von vorne herein bekannt ist. Wenn beispielsweise Lichthärtgeräte mit einem Lichtleitstabdurchmesser von 8 mm, 10 mm oder 12 mm zu Einsatz kommen können, lässt sich bevorzugt die Aufnahmeöffnung für das vordere Ende des Lichtleitstabs, die wie ein Sackloch ausgebildet ist, in dem größten zu erwartenden Durchmesser, also hier 12 mm, herstellen. Wenn nun ein Lichthärtgerät mit einem Lichtleitstab von 10 mm eingesetzt wird, wird ein Adapterring mit 1 mm Wandstärke eingesetzt, der den ansonsten bestehenden Ringspalt zwischen der Aufnahmeausnehmung des Aufsatzes oder Ansatzes und dem vorderen Ende des Lichtleitstabs ausfüllt. Bei Einsatz eines Lichthärtgeräts mit einem Lichtleitstabdurchmesser von 8 mm wird dementsprechend ein Adapterring mit 2 mm Wandstärke eingesetzt.

Dieses Verfahren ist besonders dann günstig, wenn der Aufsatz oder Ansatz in einem zentralen Dentallabor erzeugt und dem Zahnarzt dann zur Verfügung gestellt wird. Das Dentallabor muss dann nicht die Zusatzinformation erhalten, welcher Durchmesser des Lichtleitstabs zum Einsatz gelangen soll.

Wenn hingegen ein 3D-Druck vor Ort, also in der Zahnarztpraxis erfolgt, was üblicherweise als "Chairside"-Lösung bezeichnet wird, weiss der Zahnarzt meist, welches Lichthärtgerät eingesetzt werden soll, so dass der Adapterring entbehrlich ist.

In vorteilhafter Ausgestaltung ist es vorgesehen, dass die Aufnahmeausnehmung für das vordere Ende des Lichtleitstabs gegenüber dem Außendurchmesser des Lichtleitstabs ein gewisses Untermaß hat. Über eine gegebenenfalls vorhandene Einführschräge lässt sich der Lichtleitstab dennoch in die Aufnahmeausnehmung einführen, da das Material des Aufsatzes oder Ansatzes typischerweise etwas elastisch ist und bei Realisierung eines Untermaßes spielfrei auf dem Lichtleitstab sitzt.

Weitere Vorteile, Einzelheiten und Merkmale ergeben sich aus der nachfolgenden Beschreibung mehrerer Ausführungsbeispiele der Erfindung anhand der Zeichnungen.

Es zeigen:
- Fig. 1: eine schematische Ansicht einer erfindungsgemäßen Dentalrestaurationserzeugungsvorrichtung in einer Ausführungsform;
- Fig. 2: eine schematische Darstellung einer weiteren Ausführungsform einer Dentalmaterialerzeugungsvorrichtung; und
- Fig. 3: eine schematische Darstellung einer weiteren Ausführungsform einer Dentalmaterialerzeugungsvorrichtung.

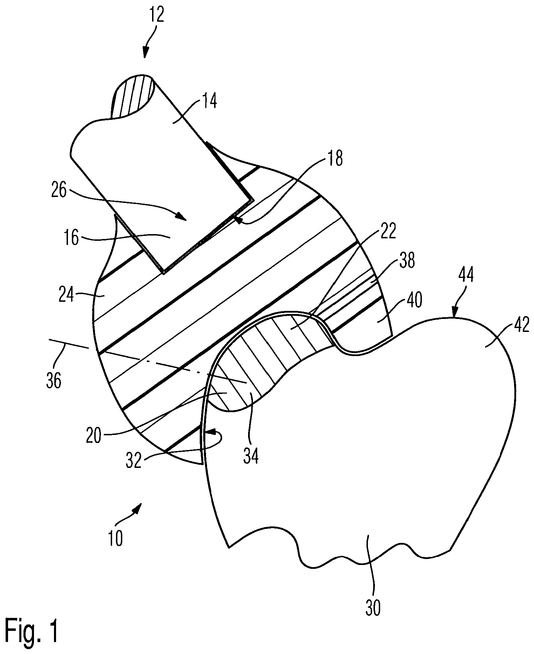

Eine Dentalmaterialerzeugungsvorrichtung 10, wie sie in Fig. 1 dargestellt ist, weist ein Strahlungshärtgerät 12 auf, von dem ein Lichtleitstab 14 in seinem vorderen Teil dargestellt ist. Der Lichtleitstab 14 weist ein vorderes Ende 16 auf, das mit einer Lichtaustrittsfläche 18 endet. Der Lichtleitstab 14 weist ein Emissionsspektrum auf, das auf den oder die Photoinitiatoren von Dentalrestaurationsmaterial 20 abgestimmt ist, das dazu dient, ein Dentalrestaurationsteil 22 zu erzeugen.

Erfindungsgemäß ist ein Aufsatz 24 vorgesehen, der auf dem Ende 16 des Lichtleitstabs 14 aufgesteckt ist.

In einem alternativen, hier nicht dargestellten Ausführungsbeispiel, ist anstelle eines Aufsatzes 24 ein Ansatz vorgesehen, der sich lediglich nach vorne von der Lichtaustrittsfläche 18 weg erstreckt und mit dem das vordere Ende 16 des Lichtleitstabs 14 in Kontakt gebracht werden kann.

Erfindungsgemäß wesentlich ist es, dass die von dem Strahlungshärtgerät 12 abgegebene Strahlungsleistung, wie sie an der Lichtaustrittsfläche 18 vorliegt, vollständig oder zumindest mit einem sehr hohen Wirkungsgrad wie 99 % in den Aufsatz 24 eingeleitet wird. Der Aufsatz 24 weist hierzu eine Aufnahmeausnehmung 26 auf, die für das Ende 16 bestimmt ist. Die Aufnahmeausnehmung 26 ist im Wesentlichen sacklochförmig und weist einen planen Boden auf, dessen Form exakt auf die Form der Lichtaustrittsfläche 18 abgestimmt ist. Bevorzugt ist eine geeignete Flüssigkeit als Dünnschicht vorgesehen, die den gleichen Brechnungsindex wie der Aufsatz 24 aufweist und über die ein luftfreier optischer Übergang zwischen der Luftaustrittsfläche 18 und dem Aufsatz 24 geschaffen wird.

Der Aufsatz 24 besteht aus Silikon, bevorzugt einen hochtransparenten Silikon und ist in besonderer Weise geformt.

Anschließend an die Aufnahmeausnehmung 26 verläuft der Aufsatz 24 ballig bzw. nahezu tropfenförmig und erstreckt sich insofern von dem Ende 16 weg.

Der Aufsatz 24 ist dafür bestimmt, an einem Zahn 30 angelegt zu werden, und zwar so, dass das dort vorliegende, aber noch ungehärtete und daher weiche Dentalrestaurationsmaterial 20 vollständig umgeben ist. Hierzu dichtet der Aufsatz 24 gegenüber dem Zahn 30 mit einer Ringfläche 32, die dreidimensional gestaltet und an die Zahnoberfläche angepasst ist, gegenüber dem Zahn ab. Die Breite der Ringfläche beträgt überall mehr als 1 mm und bevorzugt 2 mm bis 3 mm. Hierdurch ist sichergestellt, dass sich Abstützkräfte zwischen dem Strahlungshärtgerät 12 und dem Zahn 30 sicher auffangen lassen, ohne dass der Aufsatz 24 nennenswert verformt ist.

Aufgrund der Materialwahl Silikon besteht eine gewisse Elastizität des Aufsatzes 24. Die Elastizität kommt der Klemmwirkung des Aufsatzes 24 an dem Ende 16 zu Gute. Beispielsweise kann die Aufnahmeausnehmung 26 mit einem gewissen Untermaß gegenüber dem Durchmesser des Endes 16 gefertigt sein und klemmt daher auf diesem.

Der Aufsatz 24 ist an seiner dem Zahn 30 zugewandten, und insofern distalen Seite in besonderer Weise ausgebildet. Er ist durch eine CAD-Vorrichtung in seiner Form festgelegt. Hierzu wird zunächst nach einem Intraoralscann des Mundes des Patienten eine Oberflächenform für den zu restaurierenden Zahn per CAD festgelegt. Basierend hierauf wird der Aufsatz 24 als Negativform mit einer der Dentalrestaurationsoberfläche zugewandten Formungsoberfläche gefertigt. Er bildet insofern gleichsam den oberen Abschluss für einen Formhohlraum 34, der sich zwischen der Oberfläche des Restzahnes 30 und dem Aufsatz 24 ergibt. Seine Oberfläche ist entsprechend der gewünschten Form der Zielform des Dentalrestaurationsteils gestaltet.

Das Dentalrestaurationsmaterial 20 wird in den Formhohlraum 34 in beliebiger geeigneter Weise eingebracht, und zwar in weichem, also ungehärtetem Zustand. Dies kann entweder als eine Art Tropfen geschehen, der auf den Restzahn 30 aufgebracht wird. Alternativ kann auch eine der Seitenflanken entsprechend der Linie 36 kurzerhand mit einer Spritze durchstochen werden und über diese das Dentalmaterial 20 in den bereits bestehenden Formhohlraum eingebracht werden. An einer gegenüberliegenden Seite, die hier mit 38 bezeichnet ist, ist ein Luftauslasskanal vorgesehen, der beim Befüllen des Formhohlraums 34 den Austritt von Luft ermöglicht. Der Luftauslasskanal 28 mündet in den Formhohlraum 34 nahezu an dessen höchster Stelle, so dass es nicht zu erwarten ist, dass dort Luftblasen verbleiben.

Der Luftauslasskanal 38 ist bevorzugt mit einem durchsichtigen, aber porösen Material gefüllt, das den Eintritt und Durchtritt von Dentalrestaurationsmaterial 20 verhindert.

Für die Bereitstellung der Dentalrestauration wird nun zunächst das Strahlungshärtgerät 12 mit dem Aufsatz 24 passend zu dem je zu restaurierenden Zahn bestückt. Der Aufsatz 24 wird nun auf den Zahn 30 aufgedrückt, und zwar so, dass ein sicherer Formschluss und auch eine Abdichtung gegeben ist. In dem vorliegenden Ausführungsbeispiel ist bewusst eine Seitenflanke 40 des Aufsatzes 24 so ausgestaltet, dass sie bis zu einem Gegenhöcker 42 der Okklusionsfläche 44 des Zahns 30 reicht und sich dort sicher abstützen kann. Damit hat der behandelnde Zahnarzt auch gleich eine Gegenstützfläche bei der Handhabung des Strahlungshärtgeräts 12, so dass nicht nur die translatorische, sondern auch die Winkelausrichtung des Aufsatzes 24 gegenüber dem zu restaurierenden Zahn 30 vorgegeben ist.

Nachdem die optimale Restaurationsposition des Aufsatzes 24 gefunden ist, bringt der Zahnarzt über eine an sich bekannte Spritze das Dentalrestaurationsmaterial 20 in den Formhohlraum 34 ein, bis er einen Widerstand spürt. Der Eindringwiderstand bedeutet, dass der Formhohlraum 34 gefüllt ist und dass überschüssiges Dentalrestaurationsmatrial durch die Filterfuktion des Luftauslasses 38 blockiert wird.

Sobald dies wahrgenommen wird, wird die Spritze mit dem flüssigen Dentalrestaurationsmaterial entfernt. Aufgrund der Nachgiebigkeit des Silikons schließt sich dann der Einlasskanal 36 für das Dentalrestaurationsmaterial selbsttätig.

Das Strahlungshärtgerät wird für eine vorgegebene Härtungsperiode eingeschaltet, die der Dicke des Dentalrestaurationsmaterials 20 entspricht und sicherstellt, dass die Durchhärtung erfolgt.

Der Strahlungsdurchgang erfolgt praktisch umlenkungsfrei und insbesondere reflexionsarm vom Ende 16 in den Aufsatz 24 und dann in das Dentalrestaurationsmaterial 20 hinein. Hierbei ist es besonders günstig, dass die Brechnungsindizes des Glases des Lichtleitstabs 14, des Aufsatzes 24 und des Dentalrestaurationsmaterials 20 sich voneinander nur um ein geringeren Wert unterscheiden. Das Dentalrestaurationsmaterial 20 liegt im Bereich der Negativform oder der Formungsoberfläche unmittelbar an dem Aufsatz 24 an, so dass auch dort kein Luftspalt besteht und dementsprechend praktisch keine Brechung der übertretenden Strahlung.

Aufgrund des hier günstigen Eintrittswinkels der Strahlung über das Ende 16 in das Dentalrestaurationsmaterial 20 hinein wird zudem die Strahlung vom zahnseitigen bzw. gingivalen Boden des Formhohlraums 34 reflektiert und trägt weiter zur Durchhärtung bei.

Insgesamt führt die insofern optimierte Realisierung des Strahlungsverlaufs dazu, dass sich die Belichtungsdauer gegenüber den an sich bekannten luftgebundenen Dentalrestaurationserzeugungsvorrichtungen um 20 % bis 40 % reduzieren lässt.

Nach Abschluss der Durchhärtung wird der Aufsatz 24 zusammen mit dem Strahlungshärtgerät 12 entfernt, und es verbleibt das fertige, bereits geglättete Dentalrestaurationsteil. Das Dentalrestaurationsteil 22 weist typischerweise keinen Ringwulst auf, der entfernt werden müsste, vorausgesetzt, an der Ringfläche 32 erfolgt die gewünschte Abstützung und Abdichtung.

Ferner ist ein Polieren aufgrund der Glättung durch den Aufsatz 24 nicht erforderlich, oder nur in ganz geringem Maße.

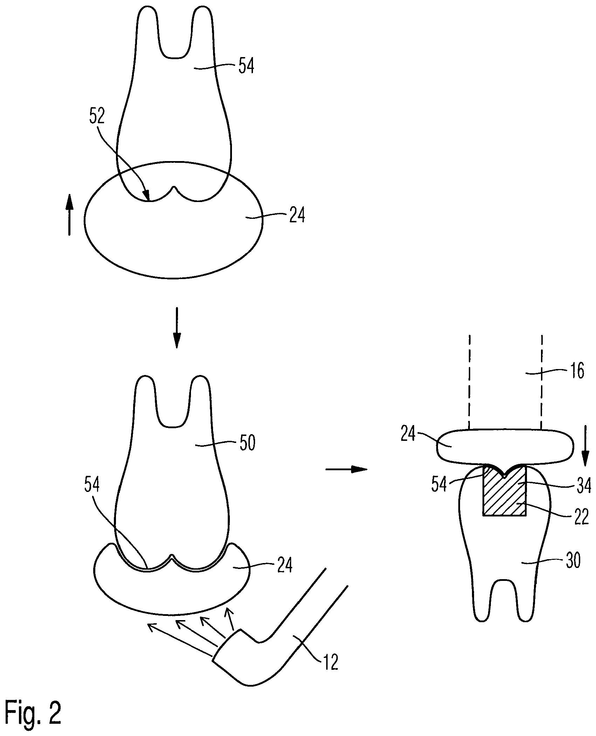

Aus Fig. 2 ist eine weitere Ausführungsform einer erfindungsgemäßen Dentalrestaurationsvorrichtung ersichtlich. Gleiche Bezugszeichen weisen hier wie auch in der weiteren Figur auf gleiche oder entsprechende Teil hin.

Bei dem anhand von Fig. 2 zu erläuternden Verfahren wird zunächst ein weicher, also ungehärteter Aufsatz 24 bereitgestellt. Dieser wird an einen Antagonisten 50 angedrückt, so dass sich an einer Oberfläche 52 eine Negativform 54 ergibt. Dieser Abdruck des Aufsatzes 24 auf dem Antagonisten 50 wird nun zunächst über das Strahlungshärtgerät 12 gehärtet. Der Aufsatz 24 wird dann von dem Antagonisten 50 abgenommen und umgedreht, so dass sich die Negativform 54 zum Zahn 30 erstreckt.

Diese wird nun als oberer Abschluss des mit Dentalrestaurationsmaterial 20 gefüllten Formhohlraums 34 verwendet. An den Aufsatz 24, der hier eher als Ansatz ausgebildet ist, wird nun das Ende 16 des Lichtleitstabs 14 des Strahlungshärtgeräts 12 aufgedrückt, und zwar oberhalb der Negativform 54. Dies ist in Fig. 2 gestrichelt angedeutet. Dann wird das Lichthärten vorgenommen, so dass sich für den Zahn 30, der das fertige Dentalrestaurationsteil 22 aufweist, eine zu dem Antagonisten 50 passende Form ergibt.

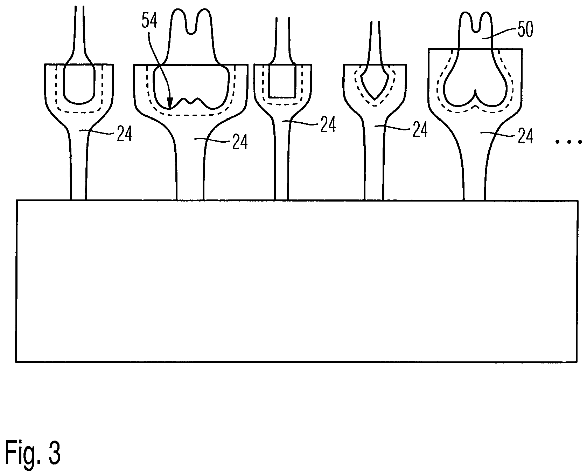

Aus Fig. 3 ist eine weitere Ausführungsform des erfindungsgemäßen Verfahrens ersichtlich. Zunächst werden zahlreiche natürliche Zähne 50 abgeformt und entsprechende Negativformen 54 bereitgestellt. Dies erfolgt für die sieben oder acht Zähne jedes Quadranten eines natürlichen Gebisses, und zudem in unterschiedlichen Größen, so dass im Rahmen einer Zahnformbibliothek naturidentische Negativformen 54 vorliegen.

Die entsprechende naturidentische Negativform des Aufsatzes 24 wird dann ausgewählt und für die Bereitstellung des Formhohlraums 34 an dem je zu behandelnden Zahn verwendet.

Insofern kann dieses Verfahren als die Realisierung eines Zahnformschlüssels mit Formungsoberflächen betrachtet werden.

## Patentansprüche

1. Verfahren zur Herstellung eines Aufsatzes (24) oder Ansatzes eines Strahlungshärtgeräts, der dem Dentalrestaurationsmaterial (20) zugewandt ist oder auf dieses richtbar ist, für eine Dentalrestaurationserzeugungsvorrichtung, umfassend härtbares Dentalrestaurationsmaterial (20), ein Strahlungshärtgerät, mit welchem mittels Lichtstrahlung, UV-Strahlung und/oder Wärmestrahlung das härtbare Dentalrestaurationsmaterial (20) zur Erzeugung eines Dentalrestaurationsteils (22) aushärtbar ist, **dadurch gekennzeichnet, dass** der Aufsatz oder Ansatz (24), der eine Formungsoberfläche aufweist, die der Zielform der Oberfläche (52) des Dentalrestaurationsmaterials (20) entspricht und eine Negativform (54) für dieses an dem dem Strahlungshärtgerät zugewandten Bereich bildet, an seiner distalen Seite durch eine CAD-Vorrichtung in seiner Form festgelegt wird, insbesondere basierend auf den Daten, die der Außenform des Dentalrestaurationsteils (22) entsprechen und dass der Aufsatz (24) oder Ansatz aus einem geeigneten Material, insbesondere aus Silikon, mittels eines formgebenden Verfahrens, insbesondere 3D-Druck, Fräsen oder Gießen, zur Darstellung einer Negativform für die erwünschte Zahnkontur, hergestellt wird.

2. Verfahren nach Anspruch 1, **dadurch gekennzeichnet dass** der Aufsatz (24) oder Ansatz aus einem transparenten Material ausgebildet wird und an dem Strahlungshärtgerät im übrigen angebracht wird.

3. Verfahren nach Anspruch 1, **dadurch gekennzeichnet, dass** der Aufsatz (24) oder Ansatz aus einem vorab, also vor der Härtung, vorverformbaren und ebenfalls härtbaren Material hergestellt wird.

4. Verfahren nach einem der vorhergehenden Ansprüche, **dadurch gekennzeichnet, dass** der Aufsatz (24) oder Ansatz so gestaltet wird, dass er an den Seitenflanken (42) im wesentlichen eine Kegelform oder eine Kegelstumpfform aufweist.

5. Verfahren nach einem der vorhergehenden Ansprüche, **dadurch gekennzeichnet, dass** der Aufsatz (24) oder Ansatz so gestaltet wird, dass er kraft- und/oder formschlüssig an dem Strahlungshärtgerät im übrigen befestigt wird und dass über diesen Druck auf das noch weiche Dentalrestaurationsmaterial (20) ausübbar ist.

6. Verfahren nach einem der vorhergehenden Ansprüche, **dadurch gekennzeichnet, dass** der Aufsatz (24) oder Ansatz per dreidimensionalem Druck erzeugt wird und seine dem Dentalrestaurationsmaterial (20) zugewandte Oberfläche (52) eine Negativform (54) für das Dentalrestaurationsmaterial (20) bildet, die für die Erzeugung eines Abdrucks nach der Art eines Stempels in dem Dentalrestaurationsmaterial (20) bestimmt ist.

7. Verfahren nach einem der vorhergehenden Ansprüche, **dadurch gekennzeichnet, dass** der Aufsatz (24) oder Ansatz lösbar an einem Lichtleiter des Strahlungshärtgeräts befestigt wird und insbesondere als Einmalprodukt gestaltet wird.

8. Verfahren nach einem der vorhergehenden Ansprüche, **dadurch gekennzeichnet, dass** der Aufsatz (24) oder Ansatz so gestaltet wird, dass er eine feste mit dem Lichtleiter des Strahlungshärtgeräts verbundene Grundform aufweist, die einer typischen Grundform menschlicher Zähne, beispielsweise deren Okklusionsfläche (44), nachempfunden ist, und auf welcher die erforderlichen Strukturen in transparentem Material modellierbar sind.

9. Verfahren nach einem der vorhergehenden Ansprüche, **dadurch gekennzeichnet, dass** eine Abdruckmasse vorgesehen ist, über welche ein Abdruck des Antagonisten (50) des Zahnes (30) mit dem Dentalrestaurationsmaterial (20) nehmbar wird und dass die Abdruckmasse nach ihrer Härtung für die Formfestlegung des Aufsatzes (24) oder Ansatzes eingesetzt wird.

10. Verfahren nach einem der vorhergehenden Ansprüche, **dadurch gekennzeichnet, dass** eine Vielzahl von Aufsätzen oder Ansätzen entsprechend den natürlichen menschlichen Zähnen als Negativformen (54) hergestellt werden, welche nach der Art eines Stempels auf das Dentalrestaurationsmaterial (20) je nach erwünschter Zahnposition drückbar und zur Formung des Dentalrestaurationsmaterials (20) verwendbar sind.

11. Verfahren nach einem der vorhergehenden Ansprüche, **dadurch gekennzeichnet, dass** der Aufsatz (24) oder Ansatz so gestaltet wird, dass er eine Aufnahme für das vordere Ende (16) eines Lichtleiters aufweist, welche Aufnahme über einen Flansch kraftschlüssig auf dem vorderen Ende (16) des Lichtleiters befestigbar ist.

12. Aufsatz oder Ansatz für ein Strahlungshärtgerät, **dadurch gekennzeichnet, dass** er nach dem Verfahren nach Anspruch 1 hergestellt ist, so dass er eine Formungsoberfläche für ein Dentalrestaurationmaterial aufweist.

13. Dentalrestaurationserzeugungsvorrichtung, umfassend härtbares Dentalrestaurationsmaterial (20), ein Strahlungshärtgerät, mit welchem mittels Lichtstrahlung, UV-Strahlung und/oder Wärmestrahlung das härtbare Dentalrestaurationsmaterial (20) zur Erzeugung eines Dentalrestaurationsteils (22) aushärtbar ist, und einen Aufsatz (24) oder Ansatz des Strahlungshärtgeräts, der dem Dentalrestaurationsmaterial (20) zugewandt ist oder auf dieses richtbar ist, **dadurch gekennzeichnet, dass** der Ansatz oder Aufsatz (24) nach dem Verfahren nach Anspruch 1 hergestellt, so dass er eine Formungsoberfläche aufweist, die der Zielform der Oberfläche (52) des Dentalrestaurationsmaterials (20) entspricht und eine Negativform (54) für dieses an dem dem Strahlungshärtgerät zugewandten Bereich bildet.

## Claims

1. A method for the manufacture of a radiation curing device add-on (24) or attachment facing or directable towards the dental restoration material (20) for a dental restoration production device comprising curable dental restoration material (20), a radiation curing device, which is used for the curable dental restoration material (20) to be curable by means of light radiation, UV radiation and/or heat radiation to produce a dental restoration part (22), **characterized in that** the add-on or attachment (24), which comprises a molding surface corresponding to the target shape of the surface (52) of the dental restoration material (20) and providing a negative mold (54) for said restoration material at a region facing the radiation curing device, will be specified in its shape at its distal side by using a CAD device, in particular based on the data, which correspond to the peripheral shape of the dental restoration part (22), and **in that** the add-on (24) or attachment is made of a suitable material, in particular silicone, using a shaping process, in particular 3D printing, milling or casting, to provide a negative mold for the desired tooth contour.

2. The method according to claim 1, **characterized in that** the add-on (24) or attachment is formed of a transparent material and is otherwise attached to the radiation curing device.

3. The method according to claim 1, **characterized in that** the add-on (24) or attachment is made of a material that is preformable in advance, i.e. before curing, and as well is curable.

4. The method according to one of the preceding claims, **characterized in that** the add-on (24) or attachment is designed such that it essentially has a conical shape or a truncated conical shape on the side flanks (42).

5. The method according to one of the preceding claims, **characterized in that** the add-on (24) or attachment is designed such that it is non-positively and/or positively fixed to the radiation curing device and **in that** using said add-on (24) or attachment pressure is allowed to be excerted onto the still soft dental restoration material (20).

6. The method according to one of the preceding claims, **characterized in that** the add-on (24) or attachment is produced by three-dimensional pressure and its surface (52) facing the dental restoration material (20) forms a negative mold (54) for the dental restoration material (20), which surface is for producing an impression in the manner of a stamp in the dental restoration material (20).

7. The method according to one of the preceding claims, **characterized in that** the add-on (24) or attachment is detachably fixed to a lightguide of the radiation curing apparatus and in particular is designed as a disposable product.

8. The method according to one of the preceding claims, **characterized in that** the add-on (24) or attachment is designed such that it comprises a specified basic shape connected to the lightguide of the radiation curing apparatus, which simulates a typical basic shape of human teeth, for example the occlusal surface (44) thereof, and on which basic shape the required structures can be molded into transparent material.

9. The method according to one of the preceding claims, **characterized in that** an impression material is provided to allow impression of the antagonist (50) of the tooth (30) to be taken with the dental restauration material (20) and **in that**, following curing, the impression material is used for shape specification of the add-on (24) or attachment.

10. The method according to one of the preceding claims, **characterized in that** a plurality of add-ons or attachments corresponding to the natural human teeth are produced as the negative molds (54) which, depending on the desired tooth position, are pressable into the dental restoration material in the manner of a stamp (20), and are suitable for molding the dental restauration material (20).

11. The method according to one of the preceding claims, **characterized in that** the add-on (24) or attachment is designed such that it comprises an accommodation for the front end (16) of a lightguide, which accommodation is non-positively attachable to the front end (16) of the lightguide via a flange.

12. An add-on or attachment for a radiation curing device, **characterized in that** it is manufactured according to the method according to claim 1 to comprises a molding surface for a dental restoration material.

13. A dental restoration production device, comprising curable dental restoration material (20), a radiation curing device which is used for the curable dental restoration material (20) to be curable by means of light radiation, UV radiation and/or heat radiation to produce a dental restoration part (22), and an add-on (24) or attachment of the dental restoration production device, which add-on (24) or attachment facing or is directable towards the dental restoration material (20), **characterized in that** the attachment or add-on (24) is manufactured according to the method of claim 1 so that it comprises a molding surface which corresponds to the target shape of the surface (52) of the denture restoration material (20) and providing a negative mold (54) for said restoration material at a region facing the radiation curing device.

## Revendications

1. Procédé de fabrication d'une fixation (24) ou d'une saillie d'un appareil de polymérisation par rayonnement, qui est tourné vers un matériau de restauration dentaire (20) ou peut être dirigé vers celui-ci, pour un dispositif de production de restaurations dentaires comprenant un matériau de restauration dentaire polymérisable (20), un appareil de polymérisation par rayonnement, avec lequel le matériau de restauration dentaire polymérisable (20) peut être polymérisé au moyen de rayonnement lumineux, de rayonnement UV et/ou de rayonnement thermique pour produire une pièce de restauration dentaire (22), **caractérisé en ce que** la fixation ou la saillie (24), qui présente une surface de formage, qui correspond à la forme cible de la surface (52) du matériau de restauration dentaire (20) et forme un moule négatif (54) pour ce dernier dans la zone tournée vers le dispositif de polymérisation par rayonnement, est fixé dans sa forme sur son côté distal par un dispositif de CAO, notamment sur la base des données, qui correspondent à la forme extérieure de la pièce de restauration dentaire (22) et que la fixation (24) ou la saillie est fabriqué dans un matériau approprié, en particulier en silicone, au moyen d'un procédé de façonnage, en particulier l'impression 3D, le fraisage ou le moulage, pour représenter un moule négatif pour le contour souhaitée de la dent.

2. Procédé selon la revendication 1, **caractérisée en ce que** la fixation (24) ou la saillie est constituée d'un matériau transparent et par ailleurs est fixé au dispositif de polymérisation par rayonnement

3. Procédé selon la revendication 1, **caractérisée en ce que** la fixation (24) ou la saillie est constituée d'un matériau qui peut être et également formé d'avance, c'est-à-dire avant le polymérisation,

4. Procédé selon l'une des revendications précédentes, **caractérisée en ce que** la fixation (24) ou la saillie est conçue de telle manière qu'elle présente essentiellement une forme conique ou tronconique sur les flancs latéraux (42).

5. Procédé selon l'une des revendications précédentes, **caractérisée en ce que** la fixation (24) ou la saillie est conçue de telle sorte qu'elle est par ailleurs fixée par friction et/ou par engagement positif au dispositif de polymérisation par rayonnement et qu'une pression peut être exercée par ce biais sur le matériau de restauration dentaire encore mou (20).

6. Procédé selon l'une des revendications précédentes, **caractérisé en ce que** la fixation (24) ou la saillie est produite par pression tridimensionnelle et sa surface (52) tournée vers le matériau de restauration dentaire (20) forme un moule négatif (54) pour le matériau de restauration dentaire (20), qui est conçue pour produire une empreinte à la manière d'un tampon dans le matériau de restauration dentaire (20).

7. Procédé selon l'une des revendications précédentes, **caractérisée en ce que** l'attache (24) ou la saillie est fixée de manière amovible à unguide de lumière de l'appareil de polymérisation par rayonnement et est conçue en particulier comme produit à usage unique.

8. Procédé selon l'une des revendications précédentes, **caractérisé en ce que** l'attache (24) ou la saillie est conçue de telle manière qu'il présente une forme de base fixe qui est reliée au guide de lumière de l'appareil de polymérisation par rayonnement, est modelée sur une forme de base typique des dents humaines, par exemple leur surface occlusale (44), et sur laquelle les structures requises peuvent être modelées en matériau transparent.

9. Procédé selon l'une des revendications précédentes, **caractérisé en ce qu'**il est prévu une masse d'empreinte, par laquelle est prise une empreinte de l'antagoniste (50) de la dent (30) avec le matériau de restauration dentaire (20), et **en ce que** la masse d'empreinte, après avoir polymérisé, est utilisée pour fixer la forme de l'attachement (24) ou de la saillie.

10. Procédé selon l'une des revendications précédentes, **caractérisé en ce qu'**une pluralité d'attaches ou de saillies correspondant aux dents humaines naturelles sont produites sous forme de moules négatifs (54), qui peuvent être pressés à la manière d'un tampon sur le matériau de restauration dentaire (20) en fonction de la position souhaitée de la dent et peuvent être utilisés pour former le matériau de restauration dentaire (20).

11. Procédé selon l'une des revendications précédentes, **caractérisé en ce que** la fixation (24) ou la saillie est conçue de telle sorte qu'elle présente un logement pour l'extrémité avant (16) d'un guide de lumière, lequel logement pouvant être fixé par friction à l'extrémité avant (16) du guide de lumière par l'intermédiaire d'une bride.

12. Fixation (24) ou saillie pour un dispositif de polymérisation par rayonnement, **caractérisé en ce qu'**elle est fabriquée selon le procédé selon la revendication 1, de sorte qu'il présente une surface de formage pour un matériau de restauration dentaire.

13. Dispositif de production de restauration dentaire, comprenant un matériau de restauration dentaire polymérisable (20), un dispositif de polymérisation par rayonnement avec lequel le matériau de restauration dentaire polymérisable (20) peut être polymérisé au moyen de rayonnement lumineux, de rayonnement UV et/ou de rayonnement thermique pour produire une pièce de restauration dentaire (22), et une fixation (24) ou une saillie du dispositif de polymérisation par rayonnement, qui est tournée vers le matériau de restauration dentaire (20) ou qui peut être dirigée vers celui-ci, **caractérisée en ce que** la saillie ou la fixation (24) est fabriquée selon le procédé selon la revendication 1, de manière à présenter une surface de formage qui correspond à la forme cible de la surface (52) du matériau de restauration dentaire (20) et forme un moule négatif (54) pour celui-ci dans la zone tournée vers l'appareil de polymérisation par rayonnement.
